(19) Europäisches Patentamt
European Patent Office
Office européen des brevets

(11) EP 2 447 227 B1

(12) **EUROPEAN PATENT SPECIFICATION**

(45) Date of publication and mention of the grant of the patent:
**12.04.2017 Bulletin 2017/15**

(21) Application number: **10791168.7**

(22) Date of filing: **26.02.2010**

(51) Int Cl.:
***C03B 37/012*** *(2006.01)*

(86) International application number:
**PCT/CN2010/070774**

(87) International publication number:
**WO 2010/148662 (29.12.2010 Gazette 2010/52)**

# (54) OPTICAL FIBER PREFORM AND MANUFACTURING METHOD THEREOF

GLASFASERVORFORM UND HERSTELLUNGSVERFAHREN DAFÜR

PRÉFORME DE FIBRE OPTIQUE ET SON PROCÉDÉ DE PRODUCTION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.06.2009 CN 200910062805**

(43) Date of publication of application:
**02.05.2012 Bulletin 2012/18**

(73) Proprietor: **Yangtze Optical Fibre and Cable Joint Stock Limited Company**
**Wuchang District**
**Wuhan**
**Hubei 430073 (CN)**

(72) Inventors:
- **HAN, Qingrong**
**Wuhan**
**Hubei 430073 (CN)**
- **YANG, Chen**
**Wuhan**
**Hubei 430073 (CN)**
- **LIU, Yongtao**
**Wuhan**
**Hubei 430073 (CN)**
- **LUO, Jie**
**Wuhan**
**Hubei 430073 (CN)**
- **RADJJ, Matai**
**Wuhan**
**Hubei 430073 (CN)**

(74) Representative: **Zeuner Summerer Stütz**
**Nußbaumstrasse 8**
**80336 München (DE)**

(56) References cited:

| | |
|---|---|
| **CN-A- 1 569 704** | **CN-A- 1 760 150** |
| **CN-A- 1 760 150** | **CN-A- 1 849 270** |
| **CN-A- 1 884 165** | **CN-A- 1 884 165** |
| **CN-A- 101 585 658** | **US-A- 5 942 296** |
| **US-A1- 2002 136 515** | **US-A1- 2003 140 659** |
| **US-A1- 2006 204 189** | **US-A1- 2007 204 657** |

- **"Low-Bending-Loss Single-Mode Fibers for Fiber-to-the-Home", JOURNAL OF LIGHTWAVE TECHNOLOGY, vol. 23, no. 11, 2005, pages 3494-3499, XP002712227,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The invention relates to an optical fiber preform and an optical fiber, a manufacturing method thereof, and a manufacturing method of an optical fiber using the optical fiber preform and, more particularly, relates to a manufacturing method of a bend-resistant single mode optical fiber preform and optical fiber with low water peak, which belongs to optical communication technical field.

### Background

During a manufacturing process of optical fibers, the use of a window of 1360nm and 1460nm is limited due to the existence of absorption peaks (named water peak) in the range of 1360-1460nm of hydroxyl groups. Therefore, in order to use the optical fiber in full wave band, including the extended wave band of 1360-1460nm, it is necessary to eliminate the effect of water peaks in the wave band. Such fibers can provide a useful band as wide as 400nm. According to ITU-T G.652.C/D Standard, when its attenuation within the range 1383$\pm$3nm is less than the stipulated value at 1310nm, the optical fiber is generally called "low water peak fiber" or "zero water peak fiber".

The optical fiber with low water peak is especially suitable for the establishment of metropolitan area network, wherein O-band (1260nm~1360nm) can be used for WDM to simulate video; multiwave-band data transmission of high bit rate (10Gb/s) may be accomplished in E-band (1360nm~1460nm); dense wave division multiplex (DWDM) transmission at 2.5 Gb/s can be opened up in S-band, C-band, and L-band (1460nm~1625nm). A system using the optical fiber has many advantages: (1) the number of wavelengths that can be multiplexed is greatly increased; (2) different transaction can be allocated to a transmitting wavelength most suitable for the transmission to improve the network management; (3) coarse wavelength division multiplexing and inexpensive components can be used, thus the cost of the whole system is reduced.

In recent years, FTTx begins to be a hot spot of the establishment of optical fiber network. Varies of optical fibers that can be used in the FTTx field have been deeply studied by people. Different types of optical fibers are designed to adapt special work environment of the FTTx from different aspects and respectively have their particular advantages in some aspects. For example, a plastic optical fiber which has a good flexibility has advantages in wiring in room; a laser-optimized multimode optical fiber, which have a high bandwidth and a high transmission speed, is suitable for short reach systems in residential areas and buildings; a bend insensitive optical fiber is suitable for applying in narrow environment in room such that a high bandwidth of the single mode optical fiber can be brought into full play; a high Stimulated Brillouin Scattering (SBS) threshold single mode optical fiber can improve the injection optical power and facilitate the integration of three networks in residential areas.

Since the access network always uses single-mode optical fibers, and with the widely use of the single-mode optical fibers with low water peak, an optical fiber with bend insensitive performance and low water peak is gradually being taken more seriously. A bending radius of a conventional optical fiber with low water peak (met ITU-T G.652C/D) is commonly 30mm, so wiring in room and other narrow environments is limited, and the use of the long wavelength (U-band: 1625-1725nm) is also limited. Therefore, it is needed to design a bend-resistant optical fiber to satisfy the use requirement of the cabling of the FTTH network and the long wavelength. In December, 2006, a new standard of optical fibers (G.657 optical fiber) is passed by ITU-T: "Characteristics of a bending loss insensitive single mode optical fiber and cable for the access network". Thus, the design of a bend resistant single mode optical fiber with low water peak is significant for the promotion of the development of optical fiber access technology.

There are many solutions in the art to reduce the bending additional loss of the optical fiber, such as reducing a mode field diameter of an optical fiber to reduce MAC value (a ratio of a mode field diameter to a effective cutoff wavelength of an optical fiber at 1550nm). I.Sakabe et al suggested to reduce the mode field diameter of an optical fiber so as to reduce the bending additional loss in "Enhanced Bending Loss Insensitive Fiber and New Cable for CWDM Access Networks", IWCS Proceeding, No. 53, pp.112-118, 2004. However, the reduction of the mode field diameter will sacrifice the splice performance for connecting with a conventional G.652 optical fiber and lower the input optical power of the optical fiber. An effective manner is to add a depressed cladding on the outside of the inner cladding of the optical fiber. S. Matsuo et al presented this optical fiber construction to reduce the bending additional loss in "Low-Bending-Loss Single-Mode Fibers for Fiber-to-the-Home", Journal of Lightwave Technology 23, No. 11, pp. 3494-3499, 2005. In the references, the design of the depressed cladding is achieved by doping fluorine.

Document CN 1 760 150 A discloses a process for preparing a large-size low-water-peak prefabricated rod of optical fiber including such steps as preparing small core rods, inserting one or more small core rods in a small sleeve tube, corroding their surfaces by F contained gas and auxiliary gas, melting to obtain a combined core rod, corroding its surface by hydrofluoric acid, washing, drying and inserting one or more combined core rods in a big sleeve tube.

There are four typical methods for the preparation of optical fiber preforms: modified chemical vapor deposition

(PCVD), plasma chemical vapor deposition (PCVD), outside vapor deposition (OVD), and vapor phase axial deposition (VAD). The MCVD and PCVD methods belong to rod-in-tube methods, in which an outer depressed cladding must be manufactured. It is hard to obtain a large size preform (with a diameter which is more than 100mm) due to the limitation of the substrate tube. And in the OVD and VAD method, a fluorine-doped cladding should be manufactured in the process of depositing the core layer and the inner cladding. The process is hard to control, and the refractivity profile can not be controlled effectively during the sintering process due to the diffusion of the fluorine. A method which can be applied in practical production is depositing to form a core rod with a cladding having a certain thickness, after dehydration and sintered, a fluorine-doped cladding being deposited on the glass core rod. Doping fluorine can be implemented in the depositing process or the sintering process. US patents 5895515 and 459571 respectively disclose the two methods. Since OVD and VAD technology utilize flame ($H_2/O_2$) hydrolysis deposition, when depositing on the glass core rod, the core rod have to expose in the oxyhydrogen flame, and a large amount of hydroxyl groups generated by the oxyhydrogen flame will diffuse into the core layer, which cause the water peak attenuation of the optical fiber to increase. Therefore, the cladding of the glass core rod needs to be thick enough to prevent the inward diffusion of the hydroxyl groups. If the cladding is too thick, the fluorine-doped cladding which is far away from the core layer can not improve the bending performance of the optical fiber being drawn.

Moreover, the optical fibers used in the access network are always connected mechanically, which requires that the optical fiber has good core/cladding concentricity in order to lower the connection loss. Thus, there is a need for a bent-resistant optical fiber which can meet G.652.D and G.657 standards, and the manufacturing cost of the optical fiber should correspond to the manufacturing cost of the G652.D optical fiber such that they can be widely used for the optical fiber access.

**Summary of the Invention**

In order to illustrate the content of the invention conveniently, some terms are defined as follow.

Optical fiber preform: a glass rod or an assembled rod consisted of a core layer and a jacket which has a radial refractive index distribution satisfying the design requirements of optical fibers and can be drawn to produce designed optical fibers.

Optical fiber core rod: preform comprising core layer and partial cladding layer.

CSA: cross sectional area, ($mm^2$).

Small cladding tube: a fluorine-doped quartz glass tube with a small CSA satisfying a certain geometry requirement.

Large cladding tube: a quartz glass tube with a large CSA satisfying a certain geometry requirement.

Optical fiber core rod with low water peak: a core rod, after fitted with a jacket made of quartz glass, can be drawn to produce an optical fiber having an attenuation which is no more than 0.4dB/km at water peaks (1383±3nm).

Assembled core rod: the optical fiber core rod and the small cladding tube are melted and combined together to form a preform (as shown in Fig.2: 1- core layer of the core rod; 2- partial cladding layer of the core rod; 3- small cladding tube).

a: diameter of the core layer of the optical fiber core rod, (mm);
b: diameter of the optical fiber core rod, (mm);
c: diameter of the assembled core rod, (mm);

Bow degree: an average of the maximum value and the minimum value of a distance of the center of the rod deviating from the rotating axis in a unit length when the rod is rotated a period.

Relative refractivity difference: $\Delta\% = \left[ \left( n_1^2 - n_0^2 \right) / 2n_1^2 \right] \times 100\%$, wherein $n_1$ and $n_0$ represent the refractivity of two glass materials respectively.

RIC process: a process for manufacturing a large size optical fiber preform by inserting the assembled core rod into the big cladding tube after the assembled core rod and the big cladding tube are processed (including tapering, drawing, etching, washing and drying and so on).

Core/cladding concentricity error: the distance between the center of the core layer of the optical fiber and the center of the optical fiber, (μm).

d: an effective diameter of the optical fiber, which is the outer diameter for an solid preform, and for a RIC preform,

$$d = \sqrt{(CSA\ of\ a\ \text{large}\ cladding\ tube + CSA\ of\ an\ assembled\ core\ rod) \times 4/\pi}\ , \text{(mm)};$$

Fluorine content (F): a relative refractivity difference of a fluorine-doped quartz glass relative to a quartz glass, which is used to represent the fluorine content (F).

Gap between the assembled core rod and the large cladding tube: a single side distance between the assembled core rod and the large cladding tube, that is to say, Gap=[inner diameter (ID) of the large cladding tube-outer diameter of the assembled core rod (c)]/2.

OVD cladding deposition technology: the deposition of $SiO_2$ glass of a desired thickness on the surface of core rod by the outside vapor deposition and sintering technology.

VAD cladding deposition technology: the deposition of $SiO_2$ glass of a desired thickness on the surface of core rod by the vapor-phase axial deposition and sintering technology;

APVD cladding deposition technology: the deposition of $SiO_2$ glass of a desired thickness on the surface of core rod by melting the natural or synthetic quartz powder on the surface of the core rod with radio frequency plasma flame.

Bare optical fiber: fiberglass with no coated layer in the optical fiber.

The technical problem to be resolved by the present invention is to provide a manufacturing method of a single mode optical fiber with low water peak.

The technical problem to be further resolved by the present invention is to provide a manufacturing method of a large size bend-resistant single mode optical fiber preform with low water peak, which has a lower manufacturing cost.

These objects are solved by the optical fiber preform of claim 1 and the manufacturing method of claim 2.

According to the above mentioned solution, the optical fiber core rod with low water peak is an optical fiber core rod with low water peak.

According to the above mentioned solution, the diameter a of the core layer of the optical fiber core rod is 6mm~14mm.

According to the above mentioned solution, the cladding tube made of fluorine-doped quartz glass is manufactured by means of OVD or VAD technology, the hydroxyl content is equal to or less than 50 ppb.

According to the above mentioned solution, the gap between the optical fiber core rod and the small cladding tube made of fluorine-doped quartz glass is 0.5-1.5mm; in the process of melting and combining the assembled core rod, a bow degree of the assembled core rod formed by melting and combining the core rod and the cladding tube made of fluorine-doped quartz glass is equal to or less than 2mm/m.

According to the above mentioned solution, the wall thickness of the large cladding tube made of quartz glass in the RIC technology is more than or equal to 30mm, in order to ensure the core/cladding concentricity, he assembled core rod is fixed in a center of the large cladding tube and kept concentric with the large cladding tube, the gap between the assembled core rod and the inner hole of the large cladding tube is equal to or less than 2mm, further requiring it equal to or less than 1.5mm.

According to the above mentioned solution, the $SiO_2$ glass jacket is deposited directly onto the assembled core rod by means of VAD or OVD or APVD technology, the ratio c/a of the diameter of the assembled core rod to the diameter of the core layer is more than or equal to 4.2 for VAD or OVD technology; and for APVD technology, the ratio c/a of the diameter of the assembled core rod to the diameter of the core layer is more than or equal to 3.5.

According to the above mentioned solution, the diameter of the optical fiber preform before being drawn is 100~200mm.

An optical fiber preform prepared by RIC technology is drawn into an optical fiber in a fiber drawing furnace, during the drawing process, a vacuum is applied between the assembled core rod and the large cladding tube and the pressure therebetween is 1,000Pa~10,000Pa. Alternatively, the large cladding tube made of quartz glass and the assembled core rod are melted and combined and drawn to form a small size preform in a drawing tower, during the process of melting and combining and drawing, a vacuum is applied between the assembled core rod and the large cladding tube and the inner pressure therebetween is 1,000Pa~10,000Pa. And then the small size preform is fiber drawing to produce an optical fiber.

The advantages of the invention are as follow: 1. a bend-resistant single mode optical fiber with low water peak can be manufactured by providing a small cladding tube made of fluorine-doped quartz glass and controlling the fluorine content to obtain a depressed cladding; 2. the invention can be used to manufacture optical fibers which can meet the standards of ITU-T G.652.D and G.657, the optical fiber prepared has a mode field diameter of 8.4-9.4 $\mu$ m at 1310nm, and its attenuation at 1310nm is equal to or less than 0.344dB/km, its attenuation at 1383nm is equal to or less than 0.344dB/km, its attenuation at 1550nm is equal to or less than 0.214dB/km, and its attenuation at 1625nm is equal to or less than 0.224dB/km, the core/cladding concentricity error is less than or equal to 0.54 $\mu$ m; the bending additional loss at 1625nm is no more than 0.2dB/round when the bending radius is 10mm, and the bending additional loss at 1625nm is no more than 1.0dB/round when the bending radius is 7.5mm; 3. the present invention can be used to

manufacturing large size optical fiber preform, the optical fiber drawn from each preform can achieve more than a thousand kilometer such that the production efficiency is improved, and bend-resistant single mode optical fiber with low water peak can be manufactured at low cost, which is obvious in mass production of optical fibers. Moreover, the method of the present invention is not limited to manufacture G.652 and G.657 optical fibers, and it can be used to manufacture any optical fiber with an outer depressed ring structure, such as G.655 optical fibers.

Drawing

Fig. 1 is a flow chat of a manufacturing process of an optical fiber preform and optical fiber according to the present invention.
Fig. 2 is a sectional view of an assembled core rod of the present invention.
Fig. 3 is a sectional view of a preform or a bare optical fiber of the present invention.
Fig.4 is a schematic view of an assembled RIC preform of the present invention.
Fig. 5 is a sectional view of a refractivity profile of the core rod of the present invention.
Fig. 6 is a relation curve of the inner pressure of RIC technology and the dynamic fatigue parameter $n_d$ of the optical fiber being drawn.
Fig. 7 is a relation curve of the Gap between the assembled core rod and the large cladding tube and the core/cladding concentricity error of the optical fiber according to the present invention.
Fig. 8 is a relation curve of c/a of the assembled core rod when preparing a jacket by means of OVD and APVD technology and the attenuation at the water peak of the optical fiber according to the present invention.

The present invention

**Embodiment 1:**

An optical fiber core rod with low water peak manufactured by PCVD process includes a core layer 1 and a partial cladding layer 2. A substrate tube being used has an outer diameter of 31mm, a wall thickness of 2mm, and a refractivity index profile of the core rod is shown in Fig.5. A fluorine-doped quartz glass tube which is manufactured by OVD process is drawn into a small cladding tube 3 with a desired size after being mechanically processed. The hydroxyl content of the small cladding tube made of fluorine-doped glass is 10-500ppb. The optical fiber core rod and the small cladding tube made of fluorine-doped glass are melted and combined together to form an assembled core rod. And then hydrofluoric acid (HF) is used to etch the surface of the assembled core rod, and the depth of etching (single side) is 0.5mm~1.0mm. A quartz glass with different outer diameters and inner diameters is used as the large cladding tube 4. A RIC preform in Fig. 4 is assembled using RIC technology. The assembled core rod 6 is fitted within the large cladding tube 4 and the center of the assembled core rod 6 is located in the center of the large cladding tube 4. An extended tube 6 is connected to an upper end of the large cladding tube, and an extended rod 7 is connected to an upper end of the assembled core rod. A RIC plug 8 and an extract opening 9 are provided between the top ends of the extended rod and the extended tube. The main parameters of the RIC preform are illustrated in Table 1. The RIC preform is drawn into an optical fiber at a drawing speed of 1500m/min and the fiber coating material for manufacturing a single mode optical fiber is used. The parameters of the optical fiber produced are shown in Table 2.

Table 1. basic parameters of the RIC preform

| No. | parameters of the assembled core rod | | | | the small cladding tube | | the large cladding tube | |
|---|---|---|---|---|---|---|---|---|
| | Δ(%) | a (mm) | b (mm) | c (mm) | hydroxyl content (ppb) | fluorine content (%) | ID(mm) | OD(mm) |
| 1 | 0.323 | 6.50 | 15.57 | 27.9 | 180 | 0.23 | 29.2 | 100.4 |
| 2 | 0.334 | 10.21 | 21.42 | 26.5 | 26 | 0.35 | 28.1 | 119.8 |
| 3 | 0.329 | 9.41 | 22.92 | 41.5 | 26 | 0.26 | 43.0 | 150.1 |
| 4 | 0.326 | 10.20 | 25.13 | 41.9 | 26 | 0.30 | 43.2 | 149.6 |
| 5 | 0.345 | 9.82 | 25.2 | 42.1 | 26 | 0.27 | 44.1 | 150.2 |
| 6 | 0.326 | 10.82 | 30.18 | 54.2 | 26 | 0.20 | 55.8 | 110.8 |

(continued)

| No. | parameters of the assembled core rod | | | | the small cladding tube | | the large cladding tube | |
|---|---|---|---|---|---|---|---|---|
| | Δ(%) | a (mm) | b (mm) | c (mm) | hydroxyl content (ppb) | fluorine content (%) | ID(mm) | OD(mm) |
| 7 | 0.334 | 10.21 | 21.42 | 26.5 | 494 | 0.35 | 30.4 | 149.8 |
| 8 | 0.326 | 9.75 | 23.32 | 41.7 | 320 | 0.24 | 43.0 | 150.0 |

Table 2. The results of the optical fiber of embodiment 1

| No | diameter of bare optical fiber (nm) | mode field diameter (nm) | cutoff wavelength(nm) | attenuation (dB/km) | | | | core/cladding concentricity error (μm) | bending additional loss at 1625nm (dB/round) | |
|---|---|---|---|---|---|---|---|---|---|---|
| | | | | 1310 nm | 1383 nm | 1550 nm | 1625 nm | | Φ20 mm | Φ15mm |
| 1 | 124.8 | 8.91 | 1258 | 0.330 | 0.312 | 0.194 | 0.206 | 0.14 | 0.04 | 0.11 |
| 2 | 100.1 | 9.15 | 1276 | 0.334 | 0.305 | 0.196 | 0.205 | 0.21 | 0.17 | 0.36 |
| 3 | 125.0 | 8.73 | 1243 | 0.333 | 0.294 | 0.194 | 0.206 | 0.09 | 0.06 | 0.17 |
| 4 | 125.0 | 9.20 | 1308 | 0.328 | 0.291 | 0.191 | 0.201 | 0.12 | 0.09 | 0.18 |
| 5 | 125.0 | 8.81 | 1289 | 0.330 | 0.307 | 0.190 | 0.191 | 0.17 | 0.04 | 0.10 |
| 6 | 79.9 | 8.67 | 1226 | 0.333 | 0.289 | 0.192 | 0.199 | 0.12 | 0.10 | 0.16 |
| 7 | 125.0 | 9.16 | 1272 | 0.333 | 0.342 | 0.194 | 0.207 | 0.24 | 0.17 | 0.36 |
| 8 | 125.0 | 8.97 | 1265 | 0.334 | 0.328 | 0.196 | 0.205 | 0.16 | 0.04 | 0.10 |

The results indicates that an optical fiber preform and optical fiber which can meet the standards of ITU-T G.652.D and G.657 can be manufactured using the solution of the invention. It should be noticed that in order to avoid an imperfection generated on the interface between the assembled core rod and the large cladding tube, it is preferable to apply a vacuum between the assembled core rod and the large cladding tube and to control the pressure therebetween within 10,000Pa. For a bent-resistant optical fiber, it is critical to control the imperfection in the optical fiber. According to IEC 60793-1-33, an antifatigue parameter $n_d$ of an optical fiber is measured with a two point bend method. For one preform processed with the same drawing technology and the same fiber coating material, the relation of the inner pressure in RIC technology and the dynamic fatigue parameter $n_d$ of the optical fiber being drawn are shown as in Fig. 6. The result indicates that the higher the pressure in RIC is, the higher the dynamic fatigue parameter $n_d$ of the optical fiber is. The wall thickness of the large cladding tube should be more than or equal to 30mm, or it is hard to make sure the large cladding tube contract uniformly during the drawing or fiber drawing operation so as to ensure its roundness.

**Embodiment 2:**

A G.652 optical fiber core rod preform with low water peak is manufactured using VAD process. The preform is drawn to produce a RIC core rod having a desired core diameter using oxyhydrogen flame, and then hydrofluoric acid (HF) is used to etch the surface thereof to form a core rod having a desired outer diameter. An assembled core rod obtained by using the small cladding tube and the solution in embodiment 1 and a large cladding tube made of quartz glass and having an outer diameter of 200mm and an inner diameter of 53mm are assembled to form a RIC preform. The parameters of the assembled core rod are shown in table 3. The assembled core rod and the large cladding tube are melt-contracted together and drawn to form a small size solid preform with an outer diameter of 80mm in a drawing tower, and then draw it to produce an optical fiber at a drawing speed of 1500m/min and the fiber coating material for manufacturing a single mode optical fiber is used. The diameter of the bare optical fiber is 124μm~126μm. The parameters of the optical fiber produced are shown in Table 4.

Table 3

| No. | VAD core rod preform | | | parameters of the core rod after being drawn | | | the small cladding tube | | | |
|---|---|---|---|---|---|---|---|---|---|---|
| | Δ(%) | core diameter (mm) | outer diameter (mm) | a(mm) | b'-before etching (mm) | b-after etching (mm) | hydroxyl content (ppb) | fluorine content (%) | ID(mm) | OD (mm) |
| 9 | 0.344 | 16.25 | 66.20 | 12.81 | 52.14 | 32.15 | 35 | 0.28 | 36.0 | 54.5 |
| 10 | 0.346 | 22.12 | 90.10 | 12.53 | 50.92 | 32.82 | 35 | 0.28 | 36.0 | 54.5 |

Table 4. The results of the optical fiber of embodiment 2

| No | mode field diameter (nm). | cutoff wavelength (nm) | attenuation (dB/km) | | | | core/cladding concentricity error (μm) | bending additional loss at 1625nm (dB/round) | |
|---|---|---|---|---|---|---|---|---|---|
| | | | 1310 nm | 1383 nm | 1550 nm | 1625 nm | | Φ20mm | Φ15mm |
| 9 | 9.12 | 1263 | 0.327 | 0.271 | 0.187 | 0.195 | 0.11 | 0.14 | 0.36 |
| 10 | 9.05 | 1248 | 0.326 | 0.275 | 0.188 | 0.196 | 0.09 | 0.13 | 0.34 |

The results indicates that an optical fiber which meets the standards of ITU-T G.652.D and G.657 can be manufactured using a VAD core rod with the solution of the invention. During tests, the VAD core rod preform has an outer diameter which is big enough after being drawing, so it can replace the assembled core rod to assemble with the large cladding tube made of quartz glass and having an outer diameter of 200mm and an inner diameter of 53mm to form a RIC preform. Different depths of etching by hydrofluoric acid (HF) are used to obtain different Gaps between the core rod and the large cladding tube. The assembled core rod and the large cladding tube are melt-contracted together and drawn to form a small size solid preform with an outer diameter of 80mm in a drawing tower. The relation between the Gap between the assembled core rod and the large cladding tube and the core/cladding concentricity error of the optical fiber being drawn is shown in Fig.7. In order to keep the core/cladding concentricity error of the optical fiber less than or equal to 0.54μm, the gap between the assembled core rod and the large cladding tube must be less than or equal to 2mm, preferably less than or equal to 1.5mm.

**Embodiment 3:**

During the depositing process for manufacturing a jacket by means of VAD or OVD technology, the core rod is obviously contaminated by hydroxyl groups due to the use of the oxyhydrogen flame. In the plasma vapor deposition technology, not only the deposited glass has a higher hydroxyl content, but also the hydroxyl groups in the environment will attach onto the rod and diffuse thereinto. Once the hydroxyl groups diffuse into the core layer of the preform, the water peaks of the optical fiber will increase. It is determined by the diffusion distance and the diffusion coefficient whether the hydroxyl groups can diffuse into the core layer of the preform or not. The diffusion distance can be increased by increasing the c/a value of the core rod, which will increase the manufacturing cost of the core rod. A fluorine-doped quartz glass can prevent the outside hydroxyl groups from diffusing into the core layer. The reaction is as follow.

$$\begin{matrix} \mathrm{Si-F} \\ \mathrm{Si-F} \end{matrix} + \mathrm{H_2O} \rightarrow \begin{matrix} \mathrm{Si} \\ \mathrm{Si} \end{matrix} > \mathrm{O} + 2\mathrm{HF}$$

Use the No. 5 core rod in embodiment 1, and increase the outer diameter of the small fluorine-doped cladding tube to obtain an assembled core rod with an outer diameter c of 50mm. After connected with an extended rod, the assembled core rod is vertically dipped into hydrofluoric acid (HF) to etch its surface. The lifting speed is controlled to make the depth of etching of the assembled core rod has a continuous change. The outer diameter c of the assembled core rod continuously varies from 29mm (according c/a=2.97) to 50mm (according c/a=5.13). Prepare a jacket by means of OVD and APVD technology respectively to prepare a preform with an out diameter of 145-150mm. And then the

preform is drawn to produce optical fiber. The diameter of the bare optical fiber is 124μm~126μm. The relation between the water peak of the optical fiber obtained and c/a is shown in Fig. 8. An optical fiber preform and optical fiber which meet the standards of ITU-T G.652.D and G.657 can be obtained by overcladding by means of VAD or APVD technology according to the solution of the present invention. Since the theory of manufacturing a jacket using VAD technology is the same as the theory of manufacturing a jacket using OVD technology, for a VAD or OVD jacket, c/a of the assembled core rod is more than or equal to 4.2, and for a APVD jacket, c/a of the assembled core rod is more than or equal to 3.5.

## Claims

1. An optical fiber preform, comprising an optical fiber core rod with low water peak, and a jacket, **characterized in that** the ratio b/a of a diameter of an optical fiber core rod to a diameter of a core layer (1) is 2.1~2.8; the optical fiber core rod is fitted within a small cladding tube (3), which is made of fluorine-doped quartz glass, the optical fiber core rod and the small cladding tube (3) being melted and combined together to form an assembled core rod (6); the ratio (c-b)/a of the diameter difference between the assembled core rod (6) and the optical fiber core rod to the diameter of the core layer (1) is 0.5~2.2; the fluorine content Δ F of the small cladding tube (3) made of fluorine-doped quartz glass is -0.20%to-0.35%, the hydroxyl content of the small cladding tube (3) made of fluorine-doped quartz glass is equal to or less than 500 ppb; a large cladding tube (4) made of quartz glass being fitted outside of the assembled core rod (6) according to RIC technology, or a $SiO_2$ glass jacket being deposited directly onto the assembled core rod (6); the ratio d/c of an effective diameter of the optical fiber preform to the diameter of the assembled core rod (6) is 2.5-5.6.

2. A manufacturing method of an optical fiber preform, comprising:

   preparing an optical fiber core rod with low water peak, the ratio b/a of a diameter of an optical fiber core rod to a diameter of a core layer (1) is 2.1~2.8;
   preparing a small cladding tube (3) made of fluorine-doped quartz glass, a relative refractivity difference thereof relative to quartz glass, namely the fluorine content Δ F of the small cladding tube (3) made of fluorine-doped quartz glass is -0.20%to-0.35%, the hydroxyl content is equal to or less than 500 ppb;
   inserting one or more optical fiber core rods into the small cladding tube (3) made of fluorine-doped quartz glass, which are then melted and combined together to form an assembled core rod (6); the ratio (c-b)/a of the diameter difference between the assembled core rod (6) and the optical fiber core rod to the diameter of the core layer (1) is 0.5~2.2;
   assembling the assembled core rod (6) and the large cladding tube (4) made of quartz glass according to the RIC technology, or depositing a $SiO_2$ glass jacket directly onto the assembled core rod (6) to obtain an optical fiber preform, the ratio d/c of an effective diameter of the optical fiber preform to the diameter of the assembled core rod (1) is 2.0-5.6.

3. The manufacturing method of the optical fiber preform according to claim 2, wherein the optical fiber core rod is a single mode optical fiber core rod with low water peaks.

4. The manufacturing method of the optical fiber preform according to claim 2 or 3, wherein the diameter a of the core layer (1) of the optical fiber core rod is 6mm~ 14mm.

5. The manufacturing method of the optical fiber preform according to claim 2 or 3, wherein the cladding tube (3) made of fluorine-doped quartz glass is manufactured by means of OVD or VAD technology, the hydroxyl content is equal to or less than 50 ppb.

6. The manufacturing method of the optical fiber preform according to claim 2 or 3, wherein a bow degree of the assembled core rod (6) formed by melting and combining the core rod and the cladding tube (3) made of fluorine-doped quartz glass is equal to or less than 2mm/m.

7. The manufacturing method of the optical fiber preform according to claim 2 or 3, wherein the surface of the assembled core rod (6) formed by melting and combining the core rod and the cladding tube made (3) of fluorine-doped quartz glass is etched with hydrofluoric acid, the depth of etching is 0.5mm~1.0mm.

8. The manufacturing method of the optical fiber preform according to claim 2 or 3, wherein the wall thickness of the large cladding tube (4) made of quartz glass in the RIC technology is more than or equal to 30mm, the assembled

core rod (6) is fixed in a center of the large cladding tube (4) and kept concentric with the large cladding tube (4), the gap between the assembled core rod (6) and the inner hole of the large cladding tube (4) is equal to or less than 2mm.

**9.** The manufacturing method of the optical fiber preform according to claim 2 or 3, wherein the $SiO_2$ glass jacket is deposited directly onto the assembled core rod (6) by means of VAD or OVD or APVD technology, the ratio c/a of the diameter of the assembled core rod (6) to the diameter of the core layer (1) is more than or equal to 4.2 for VAD or OVD technology; and for APVD technology, the ratio c/a of the diameter of the assembled core rod (6) to the diameter of the core layer (1) is more than or equal to 3.5.

**10.** The manufacturing method of the optical fiber preform according to claim 2 or 3, wherein the diameter of the optical fiber preform before being drawn is 100~ 200mm.

**11.** The manufacturing method of the optical fiber preform according to claim 2 or 3, wherein for a optical fiber preform assembled by RIC technology, the large cladding tube (4) made of quartz glass and the assembled core rod (6) are melted and combined and drawn to form a preform in a drawing tower, during the process of melting and combining and drawing, applying a vacuum between the assembled core rod and the large cladding tube (4) and the inner pressure therebetween is 1,000Pa~ 10,000Pa.

**12.** The manufacturing method of the optical fiber preform according to claim 2, wherein an optical fiber preform prepared by RIC technology is drawn into an optical fiber in a fiber drawing furnace, during the drawing process, applying a vacuum between the assembled core rod (6) and the large cladding tube (4) and the inner pressure therebetween is 1,000Pa~10,000Pa.

**Patentansprüche**

**1.** Glasfaservorform, welche einen Glasfaser-Kernstab mit niedrigem Wasserpeak und eine äußere Hülle umfasst, **dadurch gekennzeichnet, dass** das Verhältnis b/a eines Durchmessers des Glasfaser-Kernstabs zu einem Durchmesser einer Kernschicht (1) 2,1 bis 2,8 ist, dass der Glasfaser-Kernstab innerhalb eines kleinen Mantelrohrs (3) angeordnet ist, das aus fluordotiertem Quarzglas besteht, wobei der Glasfaser-Kernstab und das kleine Mantelrohr (3) geschmolzen und miteinander kombiniert sind, um einen zusammengefügten Kernstab (6) zu bilden, dass das Verhältnis (c-b)/a der Durchmesserdifferenz zwischen dem zusammengefügten Kernstab (6) und dem Glasfaser-Kernstab zu dem Durchmesser der Kernschicht (1) 0,5 bis 2,2 ist, dass der Fluorgehalt ΔF des kleinen Mantelrohrs (3) aus fluordotiertem Quarzglas -0,20 % bis -0,35 % ist, dass der Hydroxylgehalt des kleinen Mantelrohrs (3) aus fluordotiertem Quarzglas gleich oder kleiner als 500 ppb ist, wobei ein großes Mantelrohr (4) aus Quarzglas außen an dem zusammengefügten Kernstab (6) gemäß Kernstab-im-Zylinder-Technologie (RIC) angeordnet ist, oder eine äußere Hülle aus SiO2-Glas direkt auf den zusammengefügten Kernstab (6) abgeschieden ist, und dass das Verhältnis d/c eines effektiven Durchmessers der Glasfaservorform zu dem Durchmesser des zusammengefügten Kernstabs (6) 2,5 bis 5,6 ist.

**2.** Herstellungsverfahren einer Glasfaservorform, welche Folgendes umfasst:

Anfertigen eines Glasfaser-Kernstabs mit niedrigem Wasserpeak, wobei das Verhältnis b/a eines Durchmessers eines Glasfaser-Kernstabs zu einem Durchmesser einer Kernschicht (1) 2,1 bis 2,8 ist, Anfertigen eines kleinen Mantelrohrs (3) aus fluordotiertem Quarzglas, wobei eine relative Brechungsdifferenz davon relativ zu Quarzglas, nämlich der Fluorgehalt ΔF des kleinen Mantelrohrs (3) aus fluordotiertem Quarzglas -0,20 % bis -0,35 % ist, und der Hydroxylgehalt gleich oder kleiner als 500 ppb ist,
Einfügen eines oder mehrerer Glasfaser-Kernstäbe in das kleine Mantelrohr (3) aus fluordotiertem Quarzglas, die dann geschmolzen und miteinander kombiniert werden, um einen zusammengefügten Kernstab (6) zu bilden, wobei das Verhältnis (c-b)/a der Durchmesserdifferenz zwischen dem zusammengefügten Kernstab (6) und dem Glasfaser-Kernstab zu dem Durchmesser der Kernschicht (1) 0,5 bis 2,2 ist,
Zusammenfügen des zusammengefügten Kernstabs (6) und des großen Mantelrohrs (4) aus Quarzglas gemäß RIC-Technologie oder Abscheiden einer äußeren Hülle aus Si02-Glas direkt auf den zusammengefügten Kernstab (6), um eine Glasfaservorform zu erhalten, wobei das Verhältnis d/c eines effektiven Durchmessers der Glasfaservorform zu dem Durchmesser des zusammengefügten Kernstabs (1) 2,0 bis 5,6 ist.

**3.** Herstellungsverfahren der Glasfaservorform nach Anspruch 2, wobei der Glasfaser-Kernstab ein Monomode-Glasfaser-Kernstab mit niedrigen Wasserpeaks ist.

4. Herstellungsverfahren der Glasfaservorform nach Anspruch 2 oder 3, wobei der Durchmesser a der Kernschicht (1) des Glasfaser-Kernstabs 6 mm bis 14 mm ist.

5. Herstellungsverfahren der Glasfaservorform nach Anspruch 2 oder 3, wobei das Mantelrohr (3) aus fluordotiertem Quarzglas mittels OVD- oder VAD-Technologie hergestellt wird, wobei der Hydroxylgehalt gleich oder kleiner als 50 ppb ist.

6. Herstellungsverfahren der Glasfaservorform nach Anspruch 2 oder 3, wobei ein Beugegrad des durch Schmelzen und Kombinieren des Kernstabs und des Mantelrohrs (3) aus fluordotiertem Quarzglas gebildeten, zusammengefügten Kernstabs (6) gleich oder kleiner als 2 mm/m ist.

7. Herstellungsverfahren der Glasfaservorform nach Anspruch 2 oder 3, wobei die Oberfläche des durch Schmelzen und Kombinieren des Kernstabs und des Mantelrohrs (3) aus fluordotiertem Quarzglas gebildeten, zusammengefügten Kernstabs (6) mit Flusssäure geätzt wird, wobei die Ätztiefe 0,5 mm bis 1,0 mm ist.

8. Herstellungsverfahren der Glasfaservorform nach Anspruch 2 oder 3, wobei die Wandstärke des großen Mantelrohrs (4) aus Quarzglas in der RIC-Technologie-Variante größer als oder gleich 30 mm ist, wobei der zusammengefügte Kernstab (6) in einer Mitte des großen Mantelrohrs (4) befestigt wird und konzentrisch mit dem großen Mantelrohr (4) gehalten wird, wobei die Lücke zwischen dem zusammengefügten Kernstab (6) und der inneren Öffnung des großen Mantelrohrs (4) gleich oder kleiner als 2 mm ist.

9. Herstellungsverfahren der Glasfaservorform nach Anspruch 2 oder 3, wobei die äußere Hülle aus SiO2-Glas direkt auf den zusammengefügten Kernstab (6) mittels VAD- oder OVD- oder APVD-Technologie abgeschieden wird, wobei bei der VAD- oder OVD-Technologie das Verhältnis c/a des Durchmessers des zusammengefügten Kernstabs (6) zu dem Durchmesser der Kernschicht (1) größer oder gleich 4,2 ist, und bei der APVD-Technologie das Verhältnis c/a des Durchmessers des zusammengefügten Kernstabs (6) zu dem Durchmesser der Kernschicht (1) größer oder gleich 3,5 ist.

10. Herstellungsverfahren der Glasfaservorform nach Anspruch 2 oder 3, wobei der Durchmesser der Glasfaservorform vor dem Ziehen 100 bis 200 mm ist.

11. Herstellungsverfahren der Glasfaservorform nach Anspruch 2 oder 3, wobei bei einer durch RIC-Technologie zusammengefügten Glasfaservorform das große Mantelrohr (4) aus Quarzglas und der zusammengefügte Kernstab (6) geschmolzen und kombiniert und gezogen werden, um eine Vorform in einem Ziehturm zu bilden, wobei während des Vorgangs des Schmelzens und Kombinierens und Ziehens ein Vakuum zwischen dem zusammengefügten Kernstab und dem großen Mantelrohr (4) angelegt wird, und der Innendruck dazwischen 1.000 Pa bis 10.000 Pa ist.

12. Herstellungsverfahren der Glasfaservorform nach Anspruch 2, wobei eine durch RIC-Technologie angefertigte Glasfaservorform in einem Faserziehofen zu einer Glasfaser gezogen wird, wobei während des Vorgangs des Ziehens ein Vakuum zwischen dem zusammengefügten Kernstab (6) und dem großen Mantelrohr (4) angelegt wird, und der Innendruck dazwischen 1.000 Pa bis 10.000 Pa ist.

**Revendications**

1. Préforme de fibre optique, comprenant une armature de fibre optique à faible pic d'absorption en eau, et une chemise, **caractérisé en ce que** le rapport b/a d'un diamètre d'une armature de fibre optique à un diamètre de couche de coeur (1) est compris entre 2,1 et 2,8 ; l'armature de fibre optique est équipée à l'intérieur d'un petit tube de gainage (3), qui est constitué de verre de quartz dopé par du fluor, l'armature de fibre optique et le petit tube de gainage (3) étant fondus et combinés ensemble pour former une armature assemblée (6) ; le rapport (c-b)/a de la différence de diamètre entre l'armature assemblée (6) et l'armature de fibre optique au diamètre de la couche de coeur (1) est compris entre 0,5 et 2,2 ; la teneur en fluor ΔF du petit tube de gainage (3) constitué de verre de quartz dopé par du fluor est comprise entre -0,20 % et -0,35 %, la teneur en hydroxyle du petit tube de gainage (3) constitué de verre de quartz dopé par du fluor est inférieure ou égale à 500 ppb ; un grand tube de gainage (4) constitué de verre de quartz étant équipé à l'extérieur de l'armature assemblée (6) selon la technologie RIC, ou une chemise en verre de $SiO_2$ étant déposée directement sur l'armature assemblée (6) ; le rapport d/c d'un diamètre efficace de la préforme

de fibre optique au diamètre de l'armature assemblée (6) est compris entre 2,5 et 5,6.

**2.** Procédé de fabrication d'une préformée de fibre optique, consistant à :

préparer une armature de fibre optique à faible pic d'absorption en eau, le rapport b/a d'un diamètre d'une armature de fibre optique à un diamètre de couche de coeur (1) est compris entre 2,1 et 2,8 ;
préparer un petit tube de gainage (3) constitué de verre de quartz dopé par du fluor, une différence de réfractivité relative de celui-ci par rapport à du verre de quartz, à savoir la teneur en fluor $\Delta F$ du petit tube de gainage (3) constitué de verre de quartz dopé par du fluor est comprise entre -0,20 % et-0,35 %, la teneur en hydroxyle est inférieure ou égale à 500 ppb ;
insérer une ou plusieurs armatures de fibre optique à l'intérieur du petit tube de gainage (3) constitué de verre de quartz dopé par du fluor, qui sont ensuite fondus et combinés ensemble pour former une armature assemblée (6) ; le rapport (c-b)/a de la différence de diamètre entre l'armature assemblée (6) et l'armature de fibre optique au diamètre de la couche de coeur (1) est compris entre 0,5 et 2,2 ;
assembler l'armature assemblée (6) et le grand tube de gainage (4) constitué de verre de quartz selon la technologie RIC, ou déposer une chemise en verre de $SiO_2$ directement sur l'armature assemblée (6) pour obtenir une préforme de fibre optique, le rapport d/c d'un diamètre efficace de la préforme de fibre optique au diamètre de l'armature assemblée (1) est compris entre 2,0 et 5,6.

**3.** Procédé de fabrication de la préforme de fibre optique selon la revendication 2, dans lequel l'armature de fibre optique est une armature de fibre optique à mode unique avec de faibles pics d'absorption en eau.

**4.** Procédé de fabrication de la préforme de fibre optique selon la revendication 2 ou 3, dans lequel le diamètre a de la couche de coeur (1) de l'armature de fibre optique est compris entre 6 mm et 14 mm.

**5.** Procédé de fabrication de la préforme de fibre optique selon la revendication 2 ou 3, dans lequel le tube de gainage (3) constitué de verre de quartz dopé par du fluor est fabriqué au moyen d'une technologie OVD ou VAD, la teneur en hydroxyle est inférieure ou égale à 50 ppb.

**6.** Procédé de fabrication de la préforme de fibre optique selon la revendication 2 ou 3, dans lequel un degré d'inclinaison de l'armature assemblée (6) formée en faisant fondre et en combinant l'armature et le tube de gainage (3) constitué de verre de classe dopé par du fluor est inférieur ou égal à 2 mm/m.

**7.** Procédé de fabrication de la préforme de fibre optique selon la revendication 2 ou 3, dans lequel la surface de l'armature assemblée (6) formée en faisant fondre et en combinant l'armature et le tube de gainage (3) constitué de verre de quartz dopé par du fluor est gravée avec de l'acide fluorhydrique, la profondeur de la gravure est comprise entre 0,5 mm et 1,0 mm.

**8.** Procédé de fabrication de la préforme de fibre optique selon la revendication 2 ou 3, dans lequel l'épaisseur de paroi du grand tube de gainage (4) constitué de verre de quartz dans la technologie RIC est supérieure ou égale à 30 mm, l'armature assemblée (6) est fixée dans un centre du grand tube de gainage (4) et reste concentrique avec le grand tube de gainage (4), l'écart entre l'armature assemblée (6) et le trou interne du grand tube de gainage (4) est inférieur ou égal à 2 mm.

**9.** Procédé de fabrication de la préforme de fibre optique selon la revendication 2 ou 3, dans lequel la chemise en verre de $SiO_2$ est déposée directement sur l'armature assemblée (6) au moyen d'une technologie VAD ou OVD ou APVD, le rapport c/a du diamètre de l'armature assemblée (6) au diamètre de la couche de coeur (1) est supérieur ou égal à 4,2 pour la technologie VAD ou OVD ; et pour la technologie APVD, le rapport c/a du diamètre de l'armature assemblée (6) au diamètre de la couche de coeur (1) est supérieur ou égal à 3,5.

**10.** Procédé de fabrication de la préforme de fibre optique selon la revendication 2 ou 3, dans lequel le diamètre de la préforme de fibre optique avant d'être étirée est compris entre 100 et 200 mm.

**11.** Procédé de fabrication de la préforme de fibre optique selon la revendication 2 ou 3, dans lequel pour une préforme de fibre optique assemblée au moyen d'une technologie RIC, le grand tube de gainage (4) constitué de verre de quartz et l'armature assemblée (6) sont fondus et combinés et étirés pour former une préforme dans une tour d'étirage, pendant le processus de fonte et de combinaison et d'étirage, en appliquant un vide entre l'armature assemblée et le grand tube de gainage (4) et la pression interne entre ceux-ci est comprise entre 1 000 Pa et 10

000 Pa.

**12.** Procédé de fabrication de la préforme de fibre optique selon la revendication 2, dans lequel une préforme de fibre optique préparée au moyen d'une technologie RIC est étirée à l'intérieur d'une fibre optique dans un four d'étirage pour fibres, pendant le processus d'étirage, en appliquant un vide entre l'armature assemblée (6) et le grand tube de gainage (4) et la pression interne entre ceux-ci est comprise entre 1 000 Pa et 10 000 Pa.

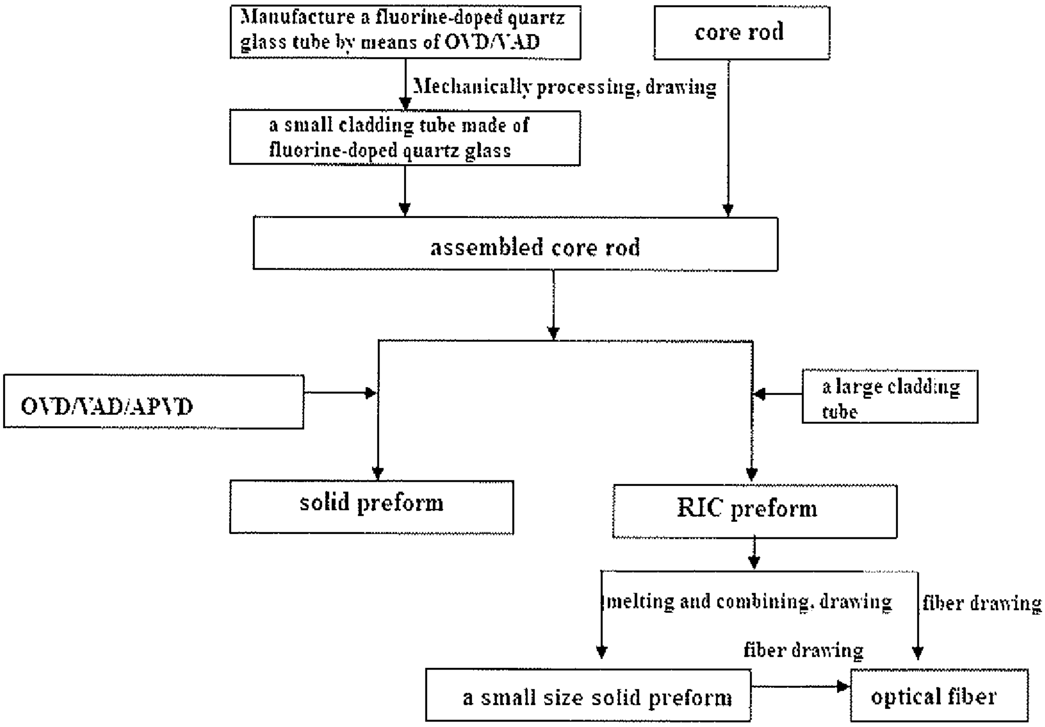
Manufacture a fluorine-doped quartz glass tube by means of OVD/VAD
core rod
Mechanically processing, drawing
a small cladding tube made of fluorine-doped quartz glass
assembled core rod
OVD/VAD/APVD
a large cladding tube
solid preform
RIC preform
melting and combining, drawing
fiber drawing
fiber drawing
a small size solid preform
optical fiber

Fig. 1

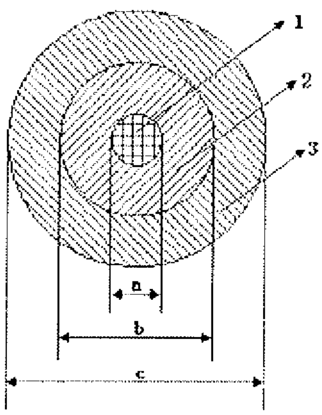
1
2
3
a
b
c

Fig.2

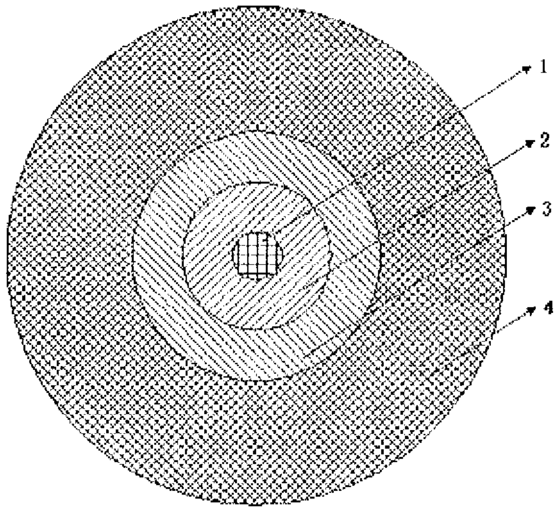


Fig. 3

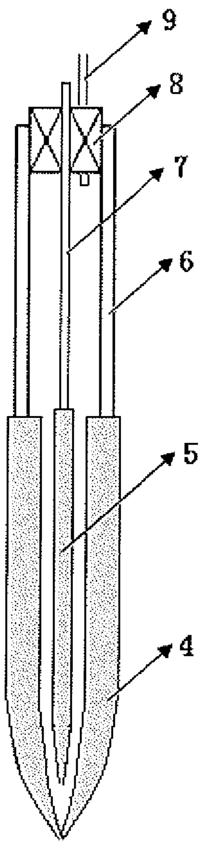


Fig. 4

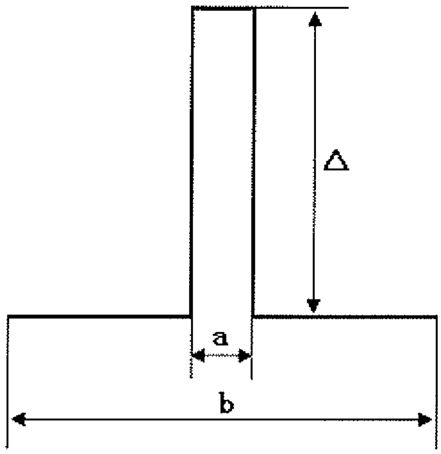
Δ
a
b

Fig. 5

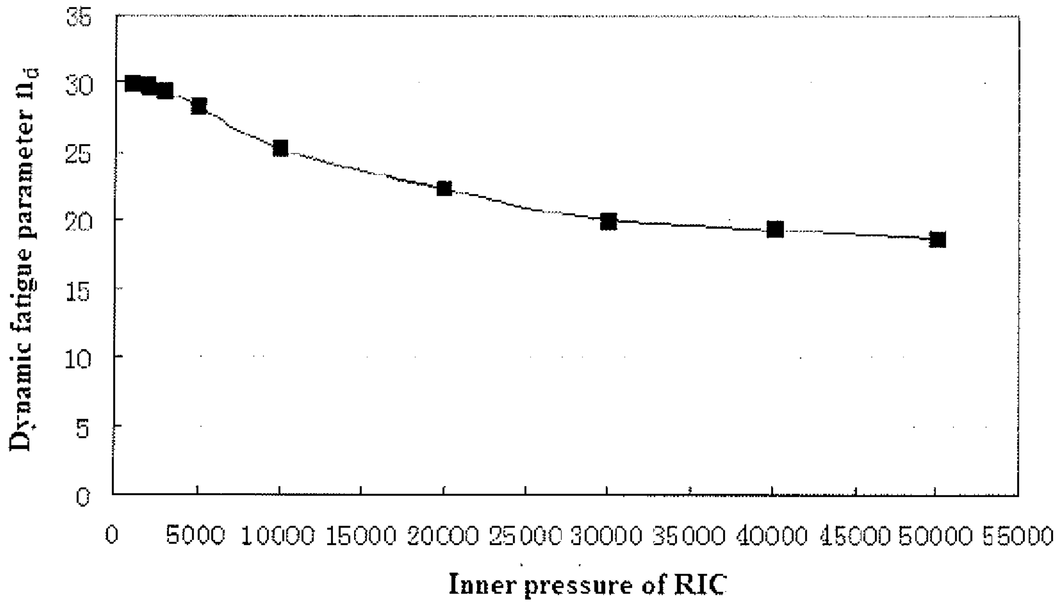
35
30
25
20
15
10
5
0
0
5000
10000
15000
20000
25000
30000
35000
40000
45000
50000
55000
Dynamic fatigue parameter $n_d$
Inner pressure of RIC

Fig. 6

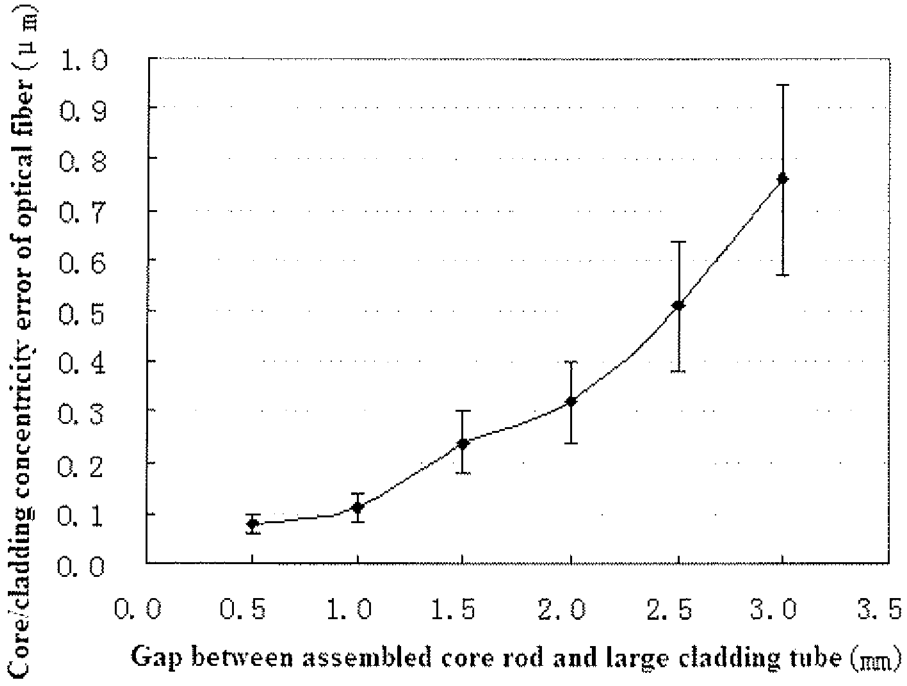
Core/cladding concentricity error of optical fiber (μm)
1.0
0.9
0.8
0.7
0.6
0.5
0.4
0.3
0.2
0.1
0.0
0.0 0.5 1.0 1.5 2.0 2.5 3.0 3.5
Gap between assembled core rod and large cladding tube (mm)

Fig. 7

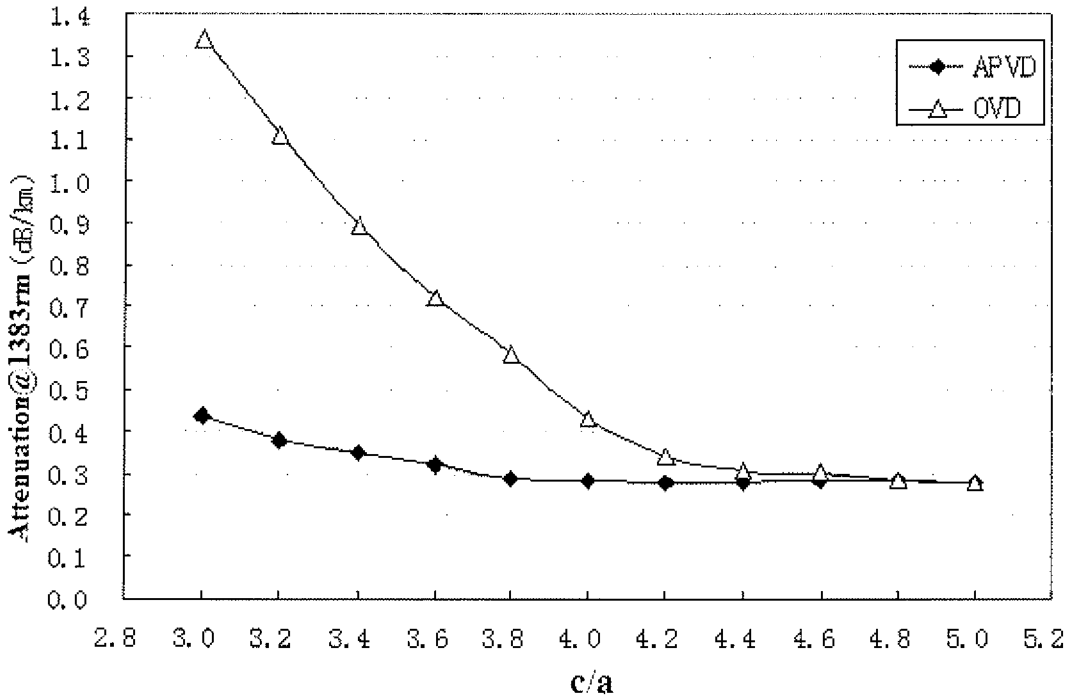
Attenuation@1383nm (dB/km)
1.4
1.3
1.2
1.1
1.0
0.9
0.8
0.7
0.6
0.5
0.4
0.3
0.2
0.1
0.0
2.8 3.0 3.2 3.4 3.6 3.8 4.0 4.2 4.4 4.6 4.8 5.0 5.2
c/a
APVD
OVD

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1760150 A
- US 5895515 A
- US 459571 A


### Non-patent literature cited in the description


- Enhanced Bending Loss Insensitive Fiber and New Cable for CWDM Access Networks. *IWCS Proceeding,* 2004, 112-118
- Low-Bending-Loss Single-Mode Fibers for Fiber-to-the-Home. *Journal of Lightwave Technology,* 2005, vol. 23 (11), 3494-3499